# EUROPÄISCHE PATENTANMELDUNG

(11) **EP 2 325 052 A1**
(43) Veröffentlichungstag der Anmeldung: **25.05.2011**
(21) Anmeldenummer: 10466027.9
(22) Anmeldetag: 15.11.2010
(51) Int. Cl.: B60R 13/02

(54) **Dachhimmelverbindung eines Fahzeugs**

(30) Priorität: 18.11.2009 CZ 20090767
(71) Anmelder: Skoda Auto A.S., 293 60 Mladá Boleslav (CZ)
(72) Erfinder: Budinsky, Marek, 78832 Staré Mesto pod Sneznikem (CZ)

(57) **Zusammenfassung**

Die Verbindung (20) des Fahrzeugdachhimmels (1), der aus mehreren Dachhimmelteilen (2, 3) besteht, die an Rändern (22, 23) der Dachhimmelteile (2, 3) im Anbindungsbereich dieser Teile ausgebildet ist. Jeder der Teile (2, 3) des Dachhimmels (1) kann separat und zerlegbar im Fahrzeuginnenraum zum Dachteil der Fahrzeugkarosserie befestigt werden.

Die Darstellung der Erfindung liegt darin, dass die Verbindung des Fahrzeugdachhimmels aus zwei Profilleisten (24, 25) besteht, die an Rändern (22, 23) der zu verbindenden Dachhimmelteile (2, 3) von der beim eingebauten Dachhimmel (1) unsichtbaren Rückseite des Dachhimmels (1) befestigt sind. Die Verbindung ist so ausgeführt, dass die erste Profilleiste (24) am Rande (22) des ersten Dachhimmelteils (2) und die zweite Profilleiste (25) am Rande (23) des zweiten Dachhimmelteils (3) befestigt sind. Die erste Profilleiste (24) weist eine Rippe (26) und die zweite Profilleiste (25) eine Rille (27) auf.

## Beschreibung

### Technisches Gebiet

Die Erfindung betrifft die Verbindung des Fahrzeugdachhimmels, der aus mehreren Teilen gebildet wird, wobei jeder Teil des Dachhimmels separat und zerlegbar zum Dachteil der Fahrzeugkarosserie im Innenraum befestigt werden kann.

### Bisheriger Stand der Technik

Fahrzeugdesign und -konstruktion sollten so entworfen sein, damit das Herausnehmen und Einlegen eines einteiligen Dachhimmels beim Fahrzeug mit eingebauter Frontscheibe auch über andere Öffnung beschädigungslos ermöglicht wird und zwar durch die Öffnung der Heckklappe oder der vorderen bzw. hinteren Seitentüren. Aus Konstruktionsgründen kann solche Bedingung unerfüllt bleiben und die Frontscheibe ausgebaut werden muss. Dies geschieht bei den Nacharbeiten während der Fahrzeugfertigung, wo der Dachhimmel aus dem Fahrzeug ausgebaut und herausgenommen und nach Beendigung der Reparatur der Dachhimmel wieder ins Fahrzeug eingelegt und eingebaut werden muss (wegen der Beschädigung des Dachhimmels, des Zugriffs aus dem Fahrzeuginnenraum zu den durch den Dachhimmel abgedeckten Komponenten, wie z.B. Antenne, Innenleuchte usw.) oder bei Reparaturen, die im Feld aus gleichen Gründen in gleicher Weise vorgenommen werden.

Da die Frontscheibe jedoch ein Sicherheitselement des Fahrzeuges darstellt, kann man sie nach dem Ausbau aus dem Fahrzeug nicht wieder einbauen, sondern eine neue Scheibe verwendet werden muss. Solche Vorgehensweise verlängert deutlich die Zeit für den Austausch des Dachhimmels und verteuert den ganzen Arbeitsschritt (zum Ausbau und Einbau der Frontscheibe muss der Preis der neuen Scheibe angerechnet werden).

Im Dokument DE102007008557 ist ein mehrteiliger Dachhimmel erwähnt. Die Lösung enthält zwar den Entwurf eines mehrteiligen Dachhimmels, jedoch die einzelnen Teile werden zusammengeklebt und so entsteht eine einteilige, nicht zerlegbare Einheit. Die gegenseitige Verbindung dieser Bestandteile erfolgt im Herstellungsprozess, wobei das Wesen des mehrteiligen Dachhimmels auf den Zeitraum vor der Verbindung noch bei der Anfertigung beschränkt wird.

Andere Lösung ist in DE19959543 beschrieben. Die Aufgabe hierbei ist, einen Fahrzeugdachhimmel zu schaffen, bei dem das Biegen oder Knicken der Teile des Dachhimmels ohne wesentlicher Ausdehnung oder Beschädigung der Deckschicht des Dachhimmels ermöglicht wird. Dieser Dachhimmel weist deshalb an gewünschten Stellen ausgestaltete Bruchlinien auf, an denen die seitlichen Dachhimmelteile umgeklappt oder umgelegt werden. Der Fahrzeugdachhimmel weist eine obere Basisstruktur auf, zu der in der Montagestellung der Dachmodul zugewandt ist. Diese Basisstruktur besteht aus einer Schaumschicht und einer aus Glasfasern gebildeten Ober- und Unterschicht, die auf der Schaumschicht sandwichartig angeordnet sind und so eine harte, feste und weitestgehend unbiegsame Struktur bilden. Der Fahrzeugdachhimmel weist auch seine, dem Fahrgastraum zugewandte Unterseite, die in der Basisstruktur eine Schaumunterlage aufweist. Der Dachhimmel ist als eine Innenraumverkleidung des Fahrzeugdaches ausgestaltet und weist zwei ausgewölbte Bereiche am vorderen und hinteren Ende quer über dem Himmel auf. Der vordere ausgewölbte Bereich dient zur Aufnahme von Sonnenblenden und der hintere ausgewölbte Bereich dient als Raum für die Kopffreiheit der Fahrzeuginsassen. Während der Montage, bei der der Dachmodul von oben in das Fahrzeugdach eingesetzt werden soll, sind beide Randbereiche des Dachhimmels biegsam oder klappbar. Diese Randbereiche des Dachhimmels sind wegen des Einsatzes in den Dachrahmen ausgestaltet, da die Öffnung des Dachrahmens kleiner als der Dachhimmel ist. Zu diesem Zweck enthält der Dachhimmel zwei längsverlaufende Bruchlinien, an denen die entsprechenden Randbereiche nach unten abklappbar sind.

Die Bruchlinien sind als Sicken in der oberen Basisstruktur ausgebildet, welche die obere Glasfaserschicht und Schaumschicht durchdringen, nicht jedoch die untere Glasfaserschicht. Aus dem oben genannten geht hervor, dass der Himmel geknickt wird und zusammen bleibt, d.h. die einzelnen Randbereiche vom Mittelteil des Himmels untrennbar sind und der Himmel also als einteilige Einheit ausgebildet ist. Dies erscheint bei einer Beschädigung eines Teils des Himmels als Nachteil, da der ganze Dachhimmel und nicht nur der beschädigte Dachhimmelteil ausgetauscht werden muss.

### Darstellung der Erfindung

Die Aufgabe wird durch die Dachhimmelverbindung eines Fahrzeugs, der aus mehreren Teilen gebildet wird, wobei jeder Teil des Dachhimmels separat und zerlegbar zum Dachteil der Fahrzeugkarosserie im Innenraum befestigt werden kann, gelöst. Diese Verbindung wird am Rande beider Dachhimmelteile an der Stelle gebildet, wo die Teile aneinander grenzen. Die Darstellung der Erfindung liegt darin, dass die Verbindung des Fahrzeugdachhimmels aus zwei Profilleisten besteht, die am Rande der zu verbindenden Dachhimmelteile von der beim eingebauten Dachhimmel unsichtbaren Rückseite des Dachhimmels befestigt sind. Die Verbindung ist so ausgeführt, dass die erste Profilleiste am Rande des ersten Dachhimmelteils und die zweite Profilleiste am Rande des zweiten Dachhimmelteils befestigt ist. Die erste Profilleiste weist eine Rippe und die zweite Profilleiste eine Rille auf.

Im oberen Teil der Verbindung weist die zweite Profilleiste einen Schlitz und die erste anliegende Profilleiste einen in den Schlitz der zweiten Profilleiste einsinkenden Vorsprung auf. Dieser Schlitz und Vorsprung sind in der Normalrichtung zum Verlauf der Formverbindung ausgestaltet, gebildet durch die Rippe und Rille der Profilleisten. Von oben weisen die Profilleisten solche Abkantungen auf, damit beide Abkantungen nach dem Einbau jeweils an der gegenüberliegenden Seite sind und eine gemeinsame Einsenkung in beiden Leisten bilden.

### Übersicht der Figuren der Zeichnungen

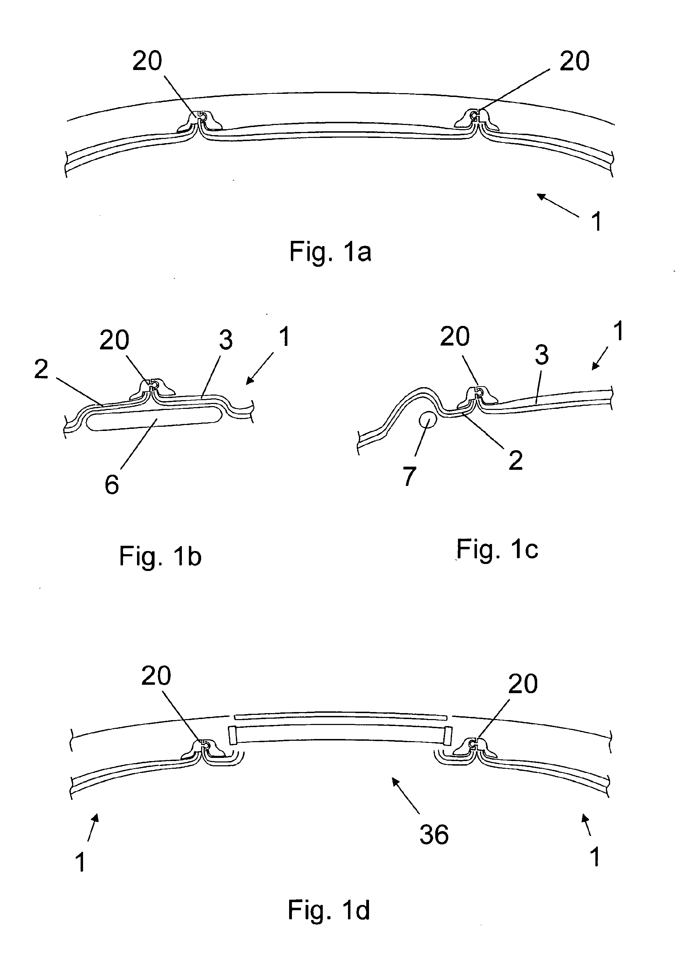

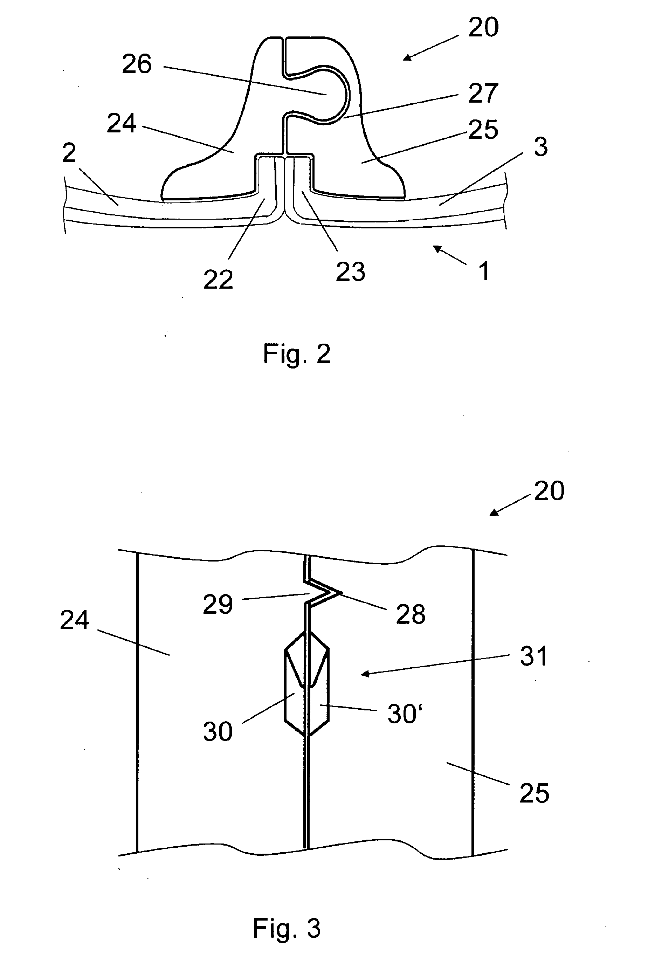

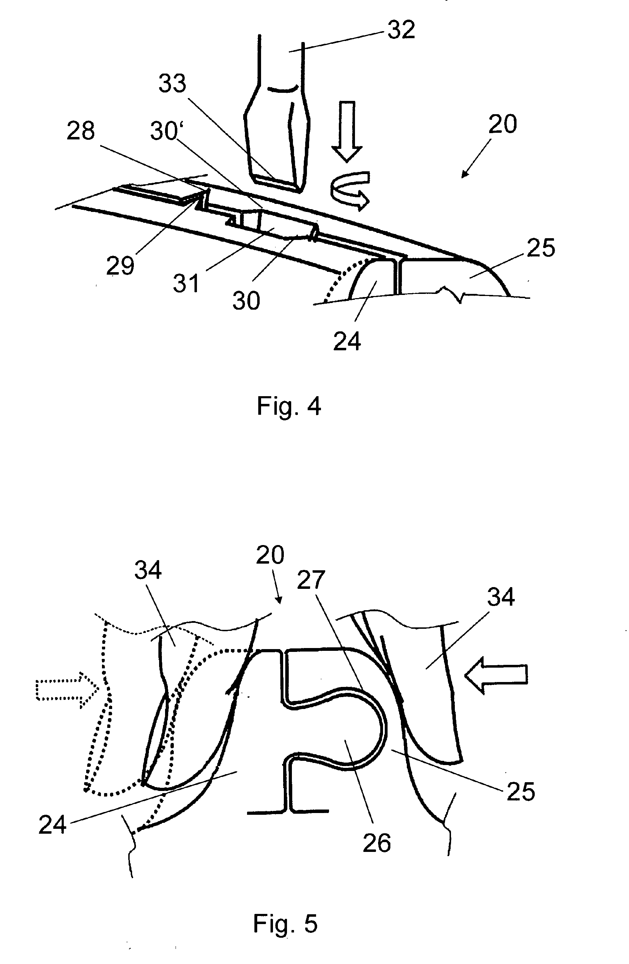

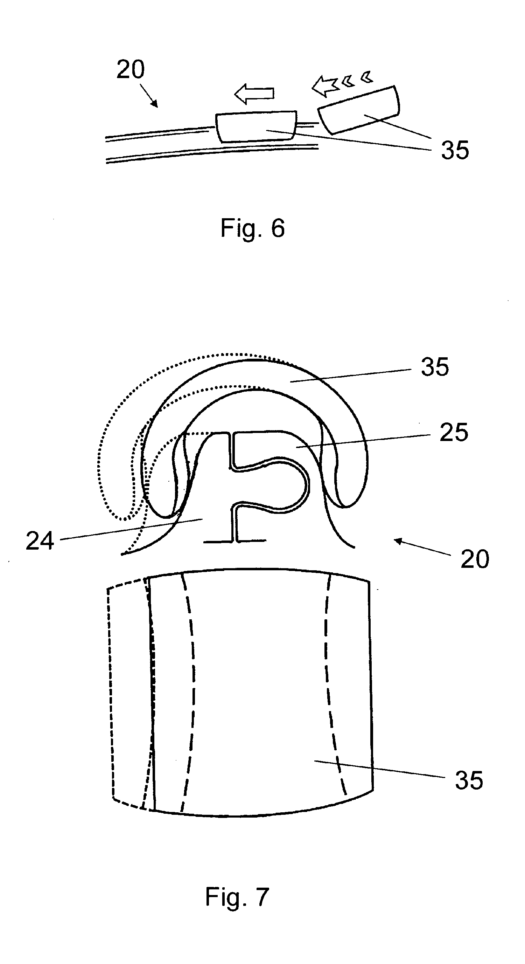

In der Fig. 1a ist schematisch in Queransicht der verbundene mehrteilige zerlegbare Dachhimmel, in Fig. 1b die Verbindung des Dachhimmelteils im Bereich der Sonnenblende, in Fig. 1c der Verlauf der Verbindungslinie um den Dachgriff, in Fig. 1d der mehrteilige zerlegbare Dachhimmel angeschlossen an Dachfenstermodul, in Fig. 2 die Verbindung der Dachhimmelteile mit Profilleisten in einer Queransicht, in Fig. 3 die Verbindung der Dachhimmelteile mit Profilleisten in einer Draufsicht, in Fig. 4 die Entkopplung der Leisten durch Einschieben der Vorrichtung, in Fig. 5 die Verbindung der Profilleisten mit Händedruck in der Gegenrichtung, in Fig. 6 das Aufsetzen eines speziellen Reiters auf die Profilleisten, in Fig. 7 die Verbindung der Profilleisten mit einem speziellen Reiter in einer Quer- und Draufsicht dargestellt.

### Ausführungsbeispiel der Erfindung

Üblicher Dachhimmel, in der Regel als einteilig ausgestaltet, ist im Karosserieinnenraum durch umliegende Einbauteile befestigt (die Sonnenblenden, der Rahmen der vorderen Mittelleuchte, die Dachgriffe, der Clip oder ähnliches Befestigungselement, z.B. Dual Lock, bzw. Klettverschluss im hinteren Bereich). Der Dachhimmel ist seitlich und im hinteren Bereich in die Dichtung eingezogen und vorne, seitlich und hinten knüpfen die oberen Säulenverkleidungen an. Bei der Fahrzeugvariante mit Ausstell- bzw. Schiebedach kann der Dachhimmel auch eben im Bereich der Anbindung des Dachhimmels an den Ausstell-/Schiebedachmodul befestigt werden.

Der Dachhimmel 1, gemäß Fig. 1 wird längs zur Fahrtrichtung mindestens auf zwei Teile aufgeteilt. In einer vorteilhaften Ausführung wird er in zwei erste (seitliche, spiegelbildlich identische) Dachhimmelteile 2 und einen Mittelteil 3 aufgeteilt. Die Trennlinien zwischen einzelnen Teilen 2, 3 werden im Bereich des Einbaues der Sonnenblende 6 geführt und verlaufen um die Dachgriffe 7 bis zum hinteren Teil des Dachhimmels 1.

Nach der Aufteilung des Bauteils können alle seine Teile 2, 3 als separate, selbsttragende und unabhängige, evtl. auch getrennt ein- oder ausbaubare Teile angesehen werden. Der erste Seitenteil 2 ist an der Karosserieinnenseite im Bereich des Dachgriffes 7 und der Sonnenblende 6 über Außenlager dieser Blende 6, eventuell auch im hinteren Bereich des Dachhimmels 1 mit einem Clip oder anderem Element (nicht abgebildet) befestigt. Der zweite Mittelteil 3 ist an der Karosserieinnenseite im Bereich der Sonnenblende 6 und des Rahmens der vorderen Mittelleuchte sowie im hinteren Bereich 9 (nicht abgebildet) befestigt. Bei einer Fahrzeugvariante mit einem Dachfenster kann der zweite Mittelteil 3 auch im Anbindungsbereich an das Dachfenstermodul 36 (Fig. 1d) befestigt werden.

Die Teile 2 und 3 des Dachhimmels 1 sind konstruktiv derart ausgestaltet, damit sie separat hergestellt werden können.

Die Teile 2 und 3 des Dachhimmels 1, nach Fig. 2, weisen an der Anbindungsstelle ausgebildete Säume 22, 23 auf. Der erste Teil 2 weist einen Rand 22 und der zweite Teil 3 den Rand 23 auf, wobei beide Ränder 22, 23 derart ausgestaltet sind, damit sie aneinander anliegen und gegenseitig passen. Im Anbindungsbereich ist an der Rückseite des Dachhimmels 1 eine Dachhimmelverbindung 20 ausgebildet, die für eine gegenseitige, zerlegbare Verbindung dieser Dachhimmelteile 2, 3 dient.

Die Dachhimmelverbindung 20 beider Teile 2, 3 des Dachhimmels 1, nach Fig. 2, besteht aus zwei der Form- und Kraftverbindung entsprechenden Profilleisten 24 und 25. Diese Leisten 24 und 25 sind von der (beim eingebauten Dachhimmel unsichtbaren) Rückseite des Dachhimmels 1 an Rändern 22, 23 der zu verbindenden Teile 2 und 3 an der Anbindungsstelle befestigt. Sie bilden also mit den Teilen 2, 3 eine nicht zerlegbare Einheit und verstärken darüber hinaus diese Teile 2, 3 des Dachhimmels 1 im Bereich des Saumes. Die erste Profilleiste 24 ist zum Rand 22 des ersten Dachhimmelteils 2 und die zweite Profilleiste 25 zum Rand 23 des zweiten Dachhimmelteils 3 befestigt. Die Befestigung der Profilleisten 24 und 25 zu den Dachhimmelteilen 2, 3 kann durch Kleben, Aufpressen, Schweißen u.ä. oder in Kombination dieser Verfahren erfolgen.

Die Position der Profilleisten 24 und 25 an den Dachhimmelteilen 2, 3 des Dachhimmels 1 müssen eine gegenseitige Verbindung ermöglichen. Als Verbindungsart wurde hier die Formverbindung auf dem Prinzip Feder/Nut derart ausgestaltet, dass die erste Profilleiste 24 eine Rippe 26 und die zweite Profilleiste 25 eine Rille 27 aufweist. Die Rippe 26 der ersten Profilleiste 24 greift mit ihrer Form genau in die Rille 27 der zweiten Profilleiste 25 ein. Beide Formelemente, d.h. die Rippe 26 sowie die Rille 27, sind in der Längsrichtung entlang der ganzen Länge der Profilleisten 24, 25 ausgebildet. Dadurch ist eine genaue gegenseitige Position der beiden zu verbindenden Teile 2, 3 definiert und gewährleistet.

Bei Beibehaltung gleicher Funktionalität kann diese Lösung der Dachhimmelverbindung 20 spiegelbildlich gewendet ausgeführt werden und zwar so, dass die erste Profilleiste 24 zum Rand 23 des zweiten Dachhimmelteils 3 und die zweite Profilleiste 25 zum Rand 22 des ersten Dachhimmelteils 2 befestigt ist. Gegen eventuelle Verschiebung beider Teile 2, 3, die bereits durch die der Rückseite des Dachhimmels entsprechende Form der Leiste im Wesentlichen eingeschränkt wird, ist im oberen Teil der Dachhimmelverbindung 20, gemäß Fig. 3, an der zweiten Profilleiste 25 mindestens ein Schlitz 28 und an der ersten anliegenden Profilleiste 24 mindestens ein Vorsprung 29 ausgebildet, der in den Schlitz 28 eingreift. Die Verbindung kann auch spiegelbildlich gewendet ausgestaltet werden, dh. der Vorsprung 29 an der zweiten Profilleiste 25 und der Schlitz 28 an der ersten anliegenden Profilleiste 24 ausgebildet wird. Der Schlitz 28 und der Vorsprung 29 sind in der Normalrichtung zum Verlauf der Formverbindung ausgestaltet, die durch die Rippe 26 und Rille 27 der Profilleisten 24, 25 gebildet wird.

Die erste Profilleiste 24 weist, gemäß Fig. 3 und 4, oben mindestens eine Abkantung 30 und die zweite Profilleiste 25 mindestens eine Abkantung 30' derart auf, damit beide Abkantungen 30, 30' nach dem Zusammenbau des Dachhimmels 1 jeweils an gegenüberliegenden Seiten sind und eine gemeinsame Einsenkung 31 in beiden Leisten 24, 25 bilden. Die Einsenkung 31 hat die Form einer Keilrille. Die Abkantungen 30, 30' werden nach Bedarf nur an einigen Stellen in der Längsrichtung mit entsprechendem Abstand untereinander ausgebildet. Die Länge der Abkantung 30, 30' ist derart ausgestaltet, damit diese das Einsetzen der Spitze 33 der Vorrichtung 32 oder der Spitze des Schraubers in die Keilrille der Einsenkung 31 ermöglicht.

Die Entkopplung nach Fig. 4 erfolgt durch das Einsetzen der Spitze 33 der Vorrichtung 32 oder des Schraubers in die Einsenkungen 31 in beiden Leisten 24, 25 und nachfolgende Drehung der Spitze in der Einsenkung 31 um den zur Entkopplung der einzelnen Leisten 24, 25 sowie einzelner Dachhimmelteile 2, 3 unbedingt erforderlichen Winkel.

Die Verbindung der getrennten Dachhimmelteile 2, 3 erfolgt durch den gegenseitigen in der Gegenrichtung wirkenden Druck auf die Formleisten 24, 25. Der Druck auf die Formleisten 24, 25 wird entweder durch die Finger 34 der Hand (Fig. 5), evtl. durch einen speziellen, als Formmuffe (Fig. 6, 7) ausgestalteten Reiter 35 bzw. durch Zangen an mehreren Stellen der Verbindung derart entwickelt, dass eine sichere Verbindung entlang der ganzen Länge des Dachhimmels 1 erzielt wird.

Die Einsenkung 31 kann auch nur mit einer Abkantung 30, 30' derart ausgestaltet sein, dass die Abkantung 30, 30' nur an einer der Leisten 24, 25 ausgebildet wird. Dem ist auch die Spitze 33 der Vorrichtung 32 bzw. des Schraubers angepasst. Bei dieser Ausführung kann jedoch durch die Nutzung eine Beschädigung der gegenüberliegenden Kante der zweiten Leiste 24, 25 auftreten, bei der die Abkantung 30, 30' nicht ausgestaltet ist.

Der mehrteilige zerlegbare Dachhimmel 1 wird direkt vom Hersteller im zusammengebauten Zustand angeliefert, also als eine Einheit mit gegenseitig verbundenen Teilen. Als eine Einheit wird er über die Öffnung der Frontscheibe ins Fahrzeug eingelegt und an die Karosserieinnenseite eingebaut. Angesichts der konstruktiven und insbesondere Design- und Farbgestaltung können die Dachhimmelteile einzeln geliefert und knapp vor dem Fahrzeugeinbau verbunden werden.

Bei Herausnahme des Dachhimmels aus dem Fahrzeug mit eingebauter Frontscheibe wird der Dachhimmel aus seiner Position in Karosserieinnenraum ausgebaut. Nach dem beschriebenen Ablauf werden die einzelnen Teile entkoppelt und beim Bedarf auch aus dem Fahrzeug herausgenommen. Der nachfolgende Einbau erfolgt durch die Einlegung der entkoppelten Teile in das Fahrzeug, deren gegenseitige Verbindung anhand des beschriebenen Verfahrens und abschließende Befestigung an der Karosserieinnenseite.

Die konstruktive Gestaltung ermöglicht so den wiederholten Einbau bzw. Ausbau durch die Verbindung bzw. Entkopplung der einzelnen Teile des Dachhimmels ohne derer Beschädigung.

### Industrielle Nutzbarkeit

Die erfindungsgemäße Dachhimmelverbindung eines Fahrzeugs kann in allen Automobilen eingesetzt werden, insbesondere dann bei Personenkraftfahrzeugen, wo die konstruktiven Möglichkeiten die Herausnahme eines ungeteilten Dachhimmels über die Heckklappe oder Seitentüren ohne notwendigen Ausbau der Fahrzeugfrontscheibe nicht erlauben und deshalb vorteilhaft der mehrteilige, zerlegbare Dachhimmel einschl. der Verbindung der einzelnen Teile des Dachhimmels verwendet werden kann.

### Verwendete Bezeichnungen

- 1: Fahrzeugdachhimmel
- 2: erster Dachhimmelteil
- 3: zweiter Dachhimmelteil
- 6: Sonnenblende
- 7: Dachgriff
- 20: Dachhimmelverbindung
- 22: Rand des ersten Teils
- 23: Rand des zweiten Teils
- 24: erste Profilleiste
- 25: zweite Profilleiste
- 26: Rippe der ersten Profilleiste
- 27: Rille der zweiten Profilleiste
- 28: Schlitz der zweiten Profilleiste
- 29: Vorsprung der ersten Profilleiste
- 30: Abkantung der ersten Profilleiste
- 30': Abkantung der zweiten Profilleiste
- 31: Einsenkung der Profilleisten
- 32: Vorrichtung (Schrauber)
- 33: Spitze der Vorrichtung (des Schraubers)
- 34: Finger der Hand
- 35: Reiter
- 36: Dachfenstermodul

## Patentansprüche

1. Dachhimmelverbindung (20) des Fahrzeugdachhimmels (1), der aus mindestens zwei Dachhimmelteilen (2, 3) besteht, wo jeder der Teile (2, 3) des Dachhimmels (1) separat selbsttragend und zerlegbar im Fahrzeuginnenraum zum Karosseriedachteil befestigt werden kann, die an Rändern (22, 23) der Dachhimmelteile (2, 3) im Anbindungsbereich der anliegenden Dachhimmelteile (2, 3) ausgebildet ist, **dadurch gekennzeichnet, dass** die Verbindung (20) aus zwei Profilleisten (24, 25) besteht, die an den Rändern (22, 23) der zu verbindenden Dachhimmelteile (2, 3) von der von der beim eingebauten Dachhimmel (1) unsichtbaren Rückseite des Dachhimmels (1) befestigt sind, indem die erste Profilleiste (24) am Rande (22) des ersten Dachhimmelteils (2) und die zweite Profilleiste (25) am Rande (23) des zweiten Dachhimmelteils (3) befestigt wird, wobei die erste Profilleiste (24) eine Rippe (26) und die zweite Profilleiste (25) eine Rille (27) aufweist.

2. Die Dachhimmelverbindung (20) nach Anspruch 1 **dadurch gekennzeichnet, dass** im oberen Teil der Verbindung (20) an der zweiten Profilleiste (25) mindestens ein Schlitz (28) und an der ersten anliegenden Profilleiste (24) mindestens ein in den Schlitz (28) eingreifender Vorsprung (29) ausgebildet ist, wobei der Schlitz (28) und der Vorsprung (29) in der Normalrichtung zum Verlauf der Formverbindung ausgestaltet sind, die durch die Rippe (26) und Rille (27) gebildet wird.

3. Die Dachhimmelverbindung (20) nach der vorherigen Ansprüche **dadurch gekennzeichnet, dass** von oben die erste Profilleiste (24) mindestens eine Abkantung (30) und die zweite Profilleiste (25) mindestens eine Abkantung (30') derart aufweist, dass beide Abkantungen (30, 30') nach dem Zusammenbau des Dachhimmels (1) sich jeweils an gegenüberliegenden Seiten befinden und so eine gemeinsame Einsenkung (31) in beiden Leisten (24, 25) bilden.
